# EUROPEAN PATENT APPLICATION

(11) **EP 4 786 419 A1**
(43) Date of publication of application: **05.08.2026**
(21) Application number: 24936202.1
(22) Date of filing: 02.09.2024
(51) Int. Cl.: C02F 1/40

(54) **OIL AND SLUDGE RECOVERY TANK**

(71) Applicant: TBM Co., Ltd., Tokorozawa-shi Saitama, 359-1164 (JP)
(72) Inventor: SAHARA, Kunihiro, Kodaira-shi Tokyo 187-0003 (JP)
(74) Representative: Tzeuton Tchangoum, Eric Olivier
(86) International application number: PCT/JP2024/031462
(87) International publication number: WO 2026/048053

(57) **Abstract**

An oil and sludge recovery tank, that can be installed on-site at food factories, commercial facilities and other locations which discharge oil-containing wastewater, and that enables the recovery of oil and sludge components from the oil-containing wastewater while minimizing operations requiring the cover opening which produces foul odor, can be provided.

The oil and sludge recovery tank comprises: an oil discharge valve OV provided on the bottom side of its side surface; a waste solid removal body 4 having a U-shaped configuration when viewed from above and comprising three rectangular prism-shaped waste solid removal plates 4a to 4c erected from the bottom surface of the oil and sludge recovery tank; and a suction space AS for suctioning oil stored within the oil and sludge recovery tank via the oil discharge valve, wherein the suction space is enclosed by said side surface and the waste solid removal body.

## Description

### Field of the Invention

The present invention relates to an oil and sludge recovery tank for recovering oil and sludge components, which can be reused as energy sources, from oil-containing wastewater discharged from food factories and commercial facilities, wherein the oil-containing wastewater is known as a biomass resource.

### Background Art

Manufacturing wastewater from food factories and other sources contains various water pollutants (oil). If such wastewater is drained without any treatment, oil and other substances in the wastewater will stick onto drain pipes and be solidified. This causes the drain pipes to become clogged. As a result, purifying water in combined treatment tanks and purifying water at sewage treatment plants become difficult. In addition, it may cause a negative impact on the environment, become subject to legal restrictions, and become unable to continue their business operations. Therefore, various methods and devices have been proposed for treating wastewater containing solids such as oil, sediment, and floating substances on a business facility basis.

One way is a method or a device for physically removing oil and other substances from wastewater. In this way, oil-containing wastewater is pooled into a large tank such as an oil/water separation tank, or raw water tank. And then, a large amount of floating oil in the upper layer of the tank is periodically pumped out, adsorbed with an adsorbent and filtered.

On the other hand, various water pollution substances are included in wastewater from fast food shops, restaurants, hotels, food factories and the like. If wastewater is wasted without any purifications, oil in wastewater will be attached and set to a waste pipe. The solid oil not only clogs the pipe but also makes it harder to purify water at a treatment tank and a sewage treatment plant. In addition, it affects the environment. Therefore, facilities for dumping wastewater, including solid substances such as floating substances, comprise processing units (grease trap, oil/water separation tank, raw water tank) in order to pool wastewater for the time being or to deposit solid substances, or to float and separate oil, or to remove these temporarily for physical removal.

Meanwhile, simple devices have been disclosed (e.g., see Patent Document 1) for small-scale or micro-businesses discharging waste oil and wastewater containing waste solids. These devices selectively separate and remove waste solids from recovered waste oil, transferring only the waste oil to separate transport or storage containers. Furthermore, an oil and sludge recovery tank has been disclosed for more efficiently recovering oil and sludge from the upper layer of an oil-water separator tank that pools oily wastewater (e.g., see Patent Document 2).

### Citation List

### Patent Document

[Patent document 1] Japanese Patent Publication No. 5452814
[Patent document 2] Japanese Patent Publication No. 7255941

### BRIEF SUMMARY OF THE INVENTION

### Problems that Invention is to Solve

However, methods and apparatus that temporarily pool oil-containing wastewater in large tanks such as an oil-water separation tank and periodically pump it out, as well as methods and apparatus that extract wastewater from grease traps and so on, require operation while opening its lid. Consequently, foul odors are spread during operation, posing problems.

Furthermore, in the above conventional methods, labor burdens of periodically manually collecting the sludge portion remaining in large tanks such as oil/water separation tanks or grease traps still occurs. Consequently, without requiring manual work while opening the lid, a device or tank, which automatically recovers reusable oil and sludge portions from oil-containing wastewater as an energy source, has not yet been realized.

Furthermore, oil recovered from oil-water separation tanks or grease traps is stored in refined oil tanks after unnecessary debris is removed by a refining transfer device. However, at the recovery site for oil and sludge components, setting up and cleaning the refining transfer device are necessary. This will cause additional workload.

Recently the problem of Global warming has become more and more serious. At the same time, renewable energy made from recycled waste is getting more attention. Waste oil, which can be biomass resources, wasted from food factories and so on, weigh more than 300,000 tons in a year in Japan. If it is expanded to a global scale, the amount will be extremely huge. Therefore, there is an urgent need to establish a device and a technology for automatically collecting recyclable oil from waste oil discharged from food factories, and the like.

The present invention has been made in view of the above-mentioned problems and has an objective to provide an oil and sludge recovery tank that can be installed on-site at food factories, commercial facilities, and other locations which discharge oil-containing wastewater. Also, the oil and sludge recovery tank enables the recovery of oil and sludge components from the oil-containing wastewater while minimizing operations requiring the cover opening, which produces foul odor. It also aims to provide an oil collecting system utilizing this oil and sludge recovery tank.

### Means to Solve the Problems

In order to solve the abovementioned issues, the present invention is an oil and sludge recovery tank for recovering reusable oil and sludge from oil-containing wastewater, comprising: an oil discharge valve provided on the side surface of the bottom side of the oil and sludge recovery tank; a waste solid removal body erected from the bottom surface of the oil and sludge recovery tank; and a suction space for suctioning oil stored within the oil and sludge recovery tank via the oil discharge valve, wherein the suction space is enclosed by said side surface and the waste solid removal body, wherein the waste solid removal body has an oil-selective function for selectively passing oil.

In this oil and sludge recovery tank, preferably, wherein the waste solid removal body has a U-shaped configuration when viewed from above and comprises three rectangular prism-shaped waste solid removal plates erected from the bottom surface of the oil and sludge recovery tank.

In this oil and sludge recovery tank, preferably, wherein, as the oil-selective function, multiple perforated holes are formed on the surface of the waste solid removal body, wherein glass wool is filled within the internal space of the waste solid removal body, and wherein a thin plate serving as a water pressure prevention wall is arranged on the bottom side of the waste solid removal body.

In this oil and sludge recovery tank, preferably, further comprising a cover member, which is operable to enclose the suction space and the waste solid removal body from the outside.

In this oil and sludge recovery tank, preferably, wherein the cover member has a shape with three sides and the top surface formed by plate-like intrusion prevention walls, while one side and the bottom surface are open, and wherein a slide bar extending vertically is connected to the top surface of the cover member.

In this oil and sludge recovery tank, preferably, further comprising: a cover plate that is detachably provided to the oil and sludge recovery tank and maintains a sealed state with the oil and sludge recovery tank when the cover plate is in a closed state, wherein the slide bar of the cover member can slide vertically by passing the slide bar through a through-hole formed in the cover plate.

In this oil and sludge recovery tank, preferably, wherein a float plate is integrally provided on the upper surface of the cover member.

In this oil and sludge recovery tank, preferably, wherein the oil and sludge recovery tank has a substantially rectangular prism shape, wherein a water discharge valve for discharging water and a sludge discharge valve for removing sludge, are provided on the bottom surface of the oil and sludge recovery tank, and wherein a tank heating section having a surface-shaped structure is provided on at least one of its side surfaces and bottom surface of the oil and sludge recovery tank.

In order to solve the abovementioned issues, the present invention is an oil recovery system, comprising: a circulation pipe, which returns from an oil supply pipe, which sends the upper layer of an oil/water separation tank, back to the oil/water separation tank via the oil and sludge recovery tank described above, wherein the oil recovery system performs oil and sludge recovery operation using said oil and sludge recovery tank from said oil/water separation tank.

In order to solve the abovementioned issues, the present invention is an oil recovery system comprising the oil and sludge recovery tank, wherein the oil and sludge recovery tank further comprises a water/residue recovery valve provided in the bottom surface of the oil and sludge recovery tank to recover separated residue and water from the bottom of the oil and sludge recovery tank, wherein the oil recovery system comprises a water/residue tank that is connected to the water/residue recovery valve, and that stores water and residue recovered from the water/residue recovery valve.

In this oil recovery system, preferably, wherein the water/residue tank further comprises a cover plate that is detachably provided to the water/residue tank and maintains a sealed state with the water/residue tank when the cover plate is in a closed state.

### Effects of the Invention

The present invention is an oil and sludge recovery tank for recovering reusable oil and sludge from oil-containing wastewater, comprising: an oil discharge valve provided on the side surface of the bottom side of the oil and sludge recovery tank; a waste solid removal body erected from the bottom surface of the oil and sludge recovery tank; and a suction space for suctioning oil stored within the oil and sludge recovery tank via the oil discharge valve, wherein the suction space is enclosed by said side surface and the waste solid removal body, wherein the waste solid removal body has an oil-selective function for selectively passing oil. With this configuration, the present invention can be installed on-site at food factories, commercial facilities, and other locations which discharge oil-containing wastewater. The present invention can also collect oil and sludge components from the oil-containing wastewater while minimizing operations requiring the cover opening, which produces foul odor.

### Brief description of Drawings

FIG.1 is a figure illustrating an overview of an oil recovery system, which includes an oil and sludge recovery tank, according to Embodiment 1 of the present invention.
FIG. 2 is (a) bottom view of the oil and sludge recovery tank; (b) side view of the oil and sludge recovery tank; (c) enlarged plane view of the oil-selective separation mechanism provided in the oil and sludge recovery tank; (d) side view of the oil and sludge recovery tank.
FIGS. 3(a) to 3(d) are explanatory views of the cover plate provided on the oil and sludge recovery tank.
FIG. 4(a) is a plane view of the waste solid removal plate provided in the oil and sludge recovery tank, FIG. 4(b) is an explanatory view of the waste solid removal plate and suction space.
FIG. 5(a) and 5(b) are explanatory views of the cover member provided in the oil and sludge recovery tank.
FIG. 6(a) and 6(b) are diagrams explaining the method of using the cover member.
FIG. 7 is a functional block diagram of the oil and sludge recovery tank.
FIG. 8(a) and 8(b) are diagrams showing the transition states of the stored portion in the oil and sludge recovery tank.
FIG. 9(c) and 9(d) are diagrams showing the transition states of the stored portion in the oil and sludge recovery tank.
FIG. 10 is a diagram explaining the outline of an oil recovery system according to Embodiment 2 of the present invention, comprising an oil and sludge recovery tank and a water/residue recovery tank.
FIG. 11(a) is the bottom view of the water/residue recovery tank, FIG. 11(b) is a side view of the water/residue recovery tank, FIG. 11(c) is a side view of the water/residue recovery tank.
FIG. 12(a) to (d) are explanatory views of the cover plate provided on the oil and sludge recovery tank.
FIG. 13(a) and (b) are diagrams showing the transition state of the stored portion in the oil and sludge recovery tank.
FIG. 14(c) and (d) are diagrams showing the transition state of the stored portion in the oil and sludge recovery tank.

### Best Mode for Carrying Out the Invention

### (Embodiment 1)

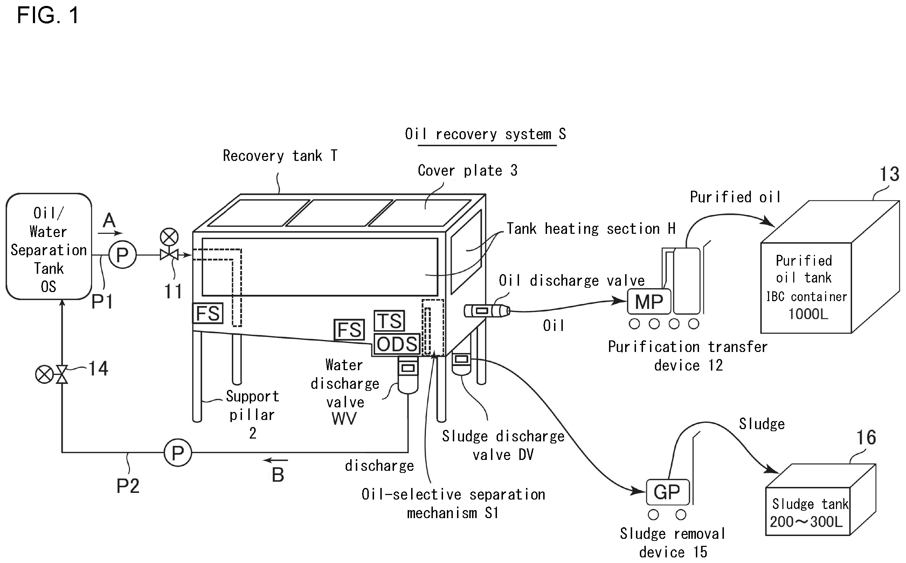

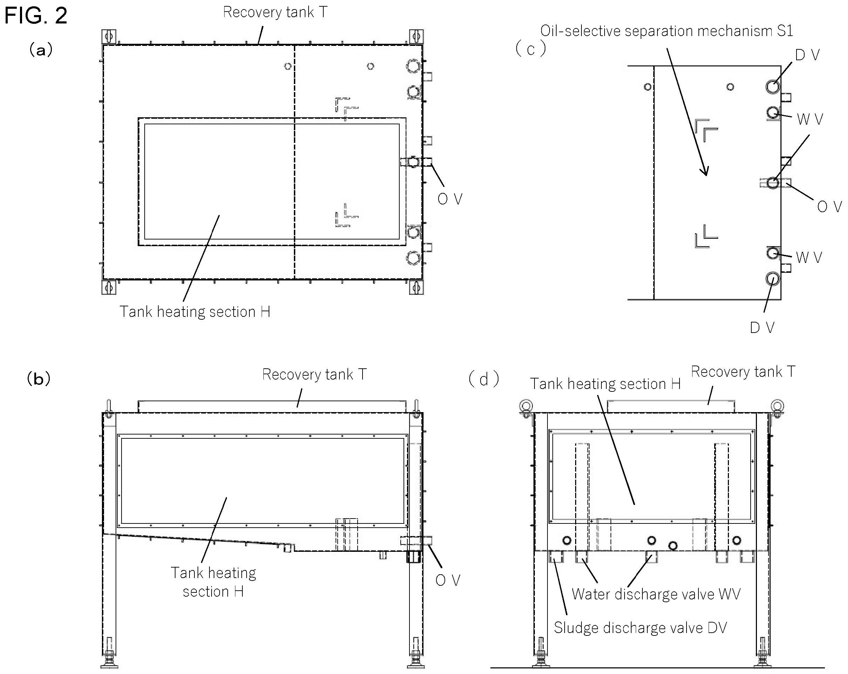

An oil collecting system having an oil and sludge recovery tank according to Embodiment 1 of the present invention will be explained with reference to FIGS. 1 to 9. This oil and sludge recovery tank is a temporary storage tank for a large amount of the upper layer (this is called a floating oil and fat, or a floating oil) that is floating in the oil/water separation tank (raw water tank), and that is pumped out therefrom. These tanks can pool manufacturing wastewater discharged from food factories, etc. Note that the upper layer of the oil/water separation tank contains, in order of increasing specific gravity, water, sludge components, and oil components. This oil collecting system efficiently recovers oil and sludge components from the floating oil taken from the oil/water separation tank, aiming for energy reuse (resource recovery). This is a food factory on-site resource recovery type installed on-site at facilities such as food factories that discharge manufacturing wastewater.

First, with reference to FIG. 1, the oil collecting system S having an oil and sludge recovery tank (hereinafter referred to as the recovery tank) according to the first embodiment will be described. The oil collecting system S comprises an oil/water separation tank OS and a recovery tank T. The oil/water separation tank OS is also sometimes called a grease trap, oil trap, grease interceptor, etc., and its basic structure is generally a natural separation flotation method that utilizes the difference in specific gravity between water and oil.

The piping of the oil collecting system S has an inflow pipe P1 (oil supply route, corresponding to arrow A) for sending the floating oil and grease (upper layer) in the oil/water separation tank OS to the recovery tank T, and a circulation pipe P2 (return route, corresponding to arrow B) for returning the inflow water stored in the recovery tank T to the oil/water separation tank OS. The circulation operation shown in this figure enables efficient recovery of oil and sludge within the recovery tank T while allowing inflow water to be recirculated back to the oil/water separation tank OS. Pumps are installed in both the inflow pipe P1 and the circulation pipe P2.

The recovery tank T receives floating oil (upper layer) in the oil/water separation tank OS, which temporarily stores oil-containing wastewater, via the inflow pipe P1. It also has an inflow valve 11 that controls the inflow volume of the floating oil pumped from the oil/water separation tank OS via the inflow pipe P1. Furthermore, oil/water mixture, sludge, and water flow from the oil/water separation tank OS into the recovery tank T.

An oil discharge valve OV, such as a 25A HT ball valve, is provided on the side of the recovery tank T (lower right side in FIG. 1) for collecting only oil. The oil discharge valve OV is fixed horizontally such that its cylindrical lower end is positioned 3 cm above the bottom surface of the recovery tank T. The oil taken via the oil discharge valve OV, using a pump such as an electromagnetic pump, then flows into the purification transfer device 12 to separate excess solids contained within the oil.

The recovery tank T has, for example, dimensions of approximately 1500 mm width × 1100 mm depth × 570 to 650 mm height (1200 mm height including the support pillar 2) (roughly 1000 L capacity). The recovery tank T has a gentle slope, which is inclined in one direction to prevent the accumulation of excess debris inside, on its bottom surface forming a roughly rectangular prism shape. The shape of the recovery tank T is not limited to the shape shown in this figure; other shapes, such as a cylindrical shape, are acceptable as long as it performs the same function.

The purification transfer device 12 possesses centrifugal separation functionality, such as a Filstar (registered trademark). After excess solids other than oil are collected within the train cup, the purified oil, from which excess solids have been removed, is ultimately collected in the purified oil tank (e.g., IBC container, 1000 L) 13.

A water discharge valve WV, such as a 40A electric ball valve, is provided at the bottom of the recovery tank T to recover water. The discharged water is returned as drainage to the oil/water separation tank OS via the circulation pipe P2. A discharge valve 14 may be provided to control the amount of water discharged. The inlet valve 11 and the discharge valve 14 are, for example, electric valves that control their open/closed state based on command signals from the control unit described later. Note that the oil discharge valve OV and water discharge valve WV may be either electric valves or manual ball valves operated by hand without receiving signal commands.

Further, a sludge discharge valve DV is provided on the bottom side of the recovery tank T to specifically extract sludge components, allowing the sludge stored within the recovery tank T to be removed. The extracted sludge is separated via a sludge removal device 15, and this separated sludge component is recovered into a sludge tank 16.

Furthermore, the recovery tank T comprises support pillars 2 extending vertically from the four corners of its bottom surface to support the tank T in a hollow state. These support pillars 2 set the height of the top surface of the recovery tank T, for example, to 1200 mm, facilitating the recovery of oil and sludge components by workers.

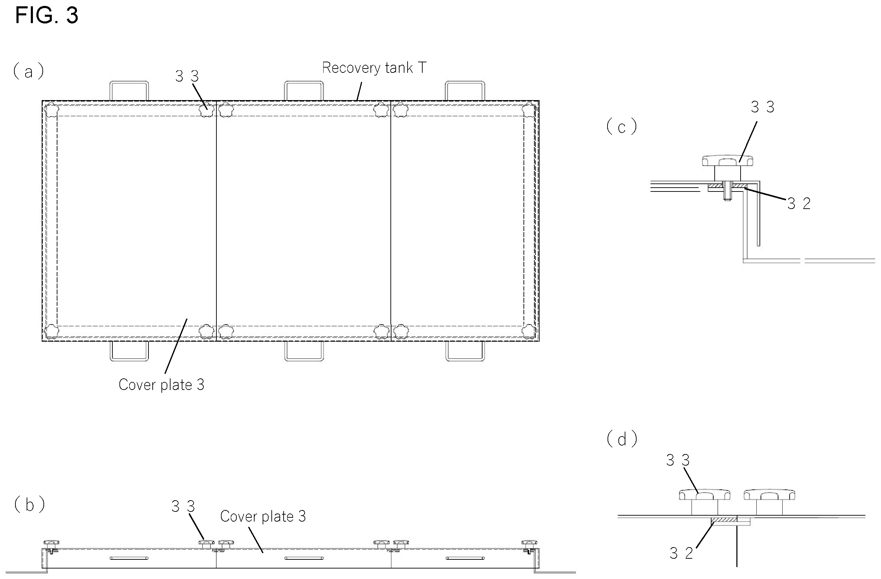

As shown in FIG. 3, three plate-shaped cover plates 3 are detachably provided on the top surface of the recovery tank T. As shown in FIG. 3, each cover plate 3 is fixed at its four corners via gaskets 32 and can be opened/closed using knob bolts 33. The cover plate 3 normally maintains the recovery tank T in a sealed state, preventing odors and the like from escaping externally. On the other hand, when necessary, the cover plate 3 can be removed by unscrewing the knob bolts 33, allowing for cleaning inside the recovery tank T or for visually inspecting its interior. Note that while the cover plate 3 shown in this figure is rectangular, it may also be square, circular, or other shapes.

The recovery tank T comprises a tank heating section H, such as a silicone rubber heater (three-phase 200V) with a surface shape formed by sandwiching a nickel alloy between silicone rubber sheets to heat the tank's bottom surface and front, rear, left, and right side surfaces; a temperature sensor TS to detect the temperature inside the recovery tank T; and an oil detection sensor ODS to detect oil content on the bottom surface of the recovery tank T.

The tank heating section H is provided, for example, as a surface-shaped structure along the five surfaces (side and bottom surfaces) of the recovery tank T, allowing selection of heating on/off for the side or bottom surfaces. The temperature sensor TS is a temperature sensor that measures the temperature of the stored contents inside the recovery tank T. It utilizes such principle that the electrical resistance of a semiconductor changes with temperature. The oil detection sensor ODS detects the presence of oil at a predetermined location (e.g., near the bottom) within the recovery tank T. This sensor ODS detects changes in output caused by the attenuation of transmitted light due to scattering or absorption by oil adhering to the sensor, for example, using optical fiber.

Furthermore, the surface side of the tank heating section H is equipped with a stainless steel (SUS) waterproof cover secured using gaskets and screws and has a structure where insulation material is enclosed within it. By enclosing this insulation material, the temperature inside the recovery tank T can be maintained within a range of approximately 65 to 70 degrees for an extended period. As a result, this can promote the efficient separation of oil, sludge, and water within the recovery tank T.

The recovery tank T comprises a float sensor FS, which is a level gauge capable of detecting the interface between the water layer and the oil-sludge layer (a mixture of oil and sludge) inside the tank T. This float sensor FS is a measuring device that utilizes a float rising and falling due to the weight of the oil/sludge to measure the interface between the water layer and the oil/sludge layer stored within the recovery tank T. It functions to accurately measure the interface between the water layer and the oil/sludge layer within the recovery tank T. This float sensor FS enables the detection of the approximate quantities of oil and sludge within the recovery tank T.

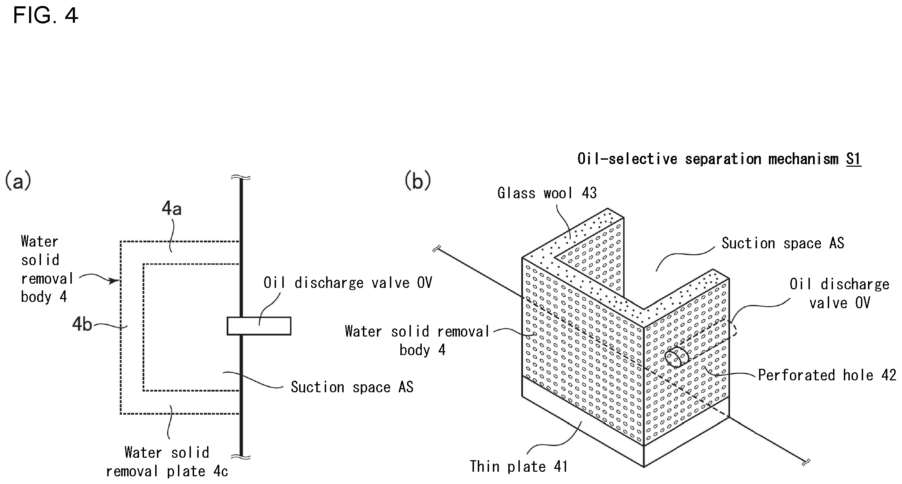

Next, by referring to FIG. 4 through FIG. 6, the oil-selective separation mechanism S1, which is provided inside the recovery tank T according to this embodiment 1, will be described. As shown in FIG. 4, a waste solid removal body 4, which has a U-shaped configuration when viewed from above, is erected from the bottom surface of the recovery tank T. The waste solid removal body 4 consists of three rectangular prism-shaped waste solid removal plates 4a to 4c, which are connected in series within the recovery tank T. As a result, an oil suction space AS is formed between this waste solid removal body 4 and the side surface where the oil discharge valve OV is formed. Note that the waste solid removal body 4 is not limited to a U-shape when viewed from above; other shapes, such as a semicircular shape when viewed from above, are acceptable as long as it fulfills its function.

This waste solid removal body 4 is erected at a predetermined height (e.g., 250 mm) from the bottom surface of the recovery tank T and has dimensions of approximately 500 mm (long side) × 350 mm (short side) when viewed from above. The suction space AS has dimensions of approximately 300 mm (long side) × 250 mm (short side) × 250 mm (height) (e.g., a capacity of 18.75 L).

This waste solid removal body 4 (and similarly the three waste solid removal plates 4a to 4c) comprises an oil-selective function. It possesses a mesh structure made of metal or synthetic resin (e.g., glass wool or stainless steel perforated sheet), as a result, the waste solid removal body 4 is capable of filtering and removing waste solids such as debris and suspended matter. Specifically, for the oil-selective function, multiple perforated holes 42 are formed on the surface of the waste solid removal body 4, and the internal space is filled with glass wool 43 as a filler material. Note that this shape may be any other structure or shape as long as it can selectively collect an oil.

Furthermore, a SUS (stainless steel) thin plate 41, serving as a water flow prevention wall, may be welded approximately 50 mm from the bottom side of the waste solid removal body 4, as shown in FIG. 4(b). This thin plate 41 prevents water from flowing into the suction space AS, even if the waste solid removal body 4 is pressured from external water while water remains in the bottom area of the recovery tank T. Consequently, the thin plate 41 can prevent water from entering the suction space AS. Furthermore, anticipating water inflow into the suction space AS, it is conceivable to install a water discharge valve WV and an oil detection sensor on the bottom surface side within the suction space AS to discharge any inflow water.

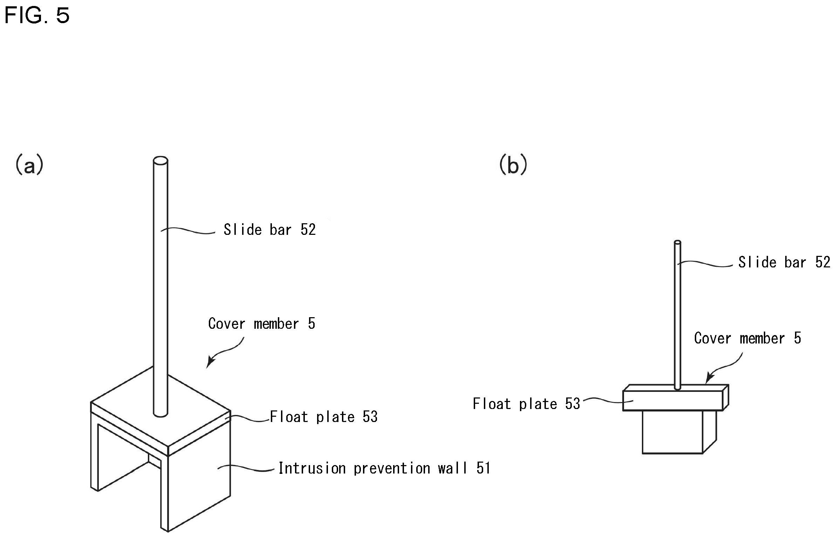

The recovery tank T further comprises, as shown in FIG. 5, a cover member 5 for covering the suction space AS formed by the waste solid removal body 4 and the waste solid removal body 4 from the outside. This cover member 5 has a rectangular prism shape with three sides and the top surface formed by plate-like intrusion prevention walls 51, while one side and the bottom surface are open. A slide bar 52 extending vertically is connected to the top surface of the cover member 5. By passing this slide bar 52 through a through-hole 32 formed in the cover plate 3 of the recovery tank T, the cover member 5 can slide vertically. When the cover member 5 is positioned at its lowest point, the cover member 5 can cover the waste solid removal body 4 (i.e., suction space AS) from the outside.

Furthermore, as shown in FIG. 5(b), a float plate 53 may be integrally provided on the top surface of the cover member 5. This float plate 53 allows the cover member 5 to move vertically without detaching from the float plate 53, preventing the cover member 5 from sinking due to the weight of oil or other substances, which were flowing into the recovery tank T. Specifically, in this first embodiment, the float plate 53 is a polystyrene foam plate.

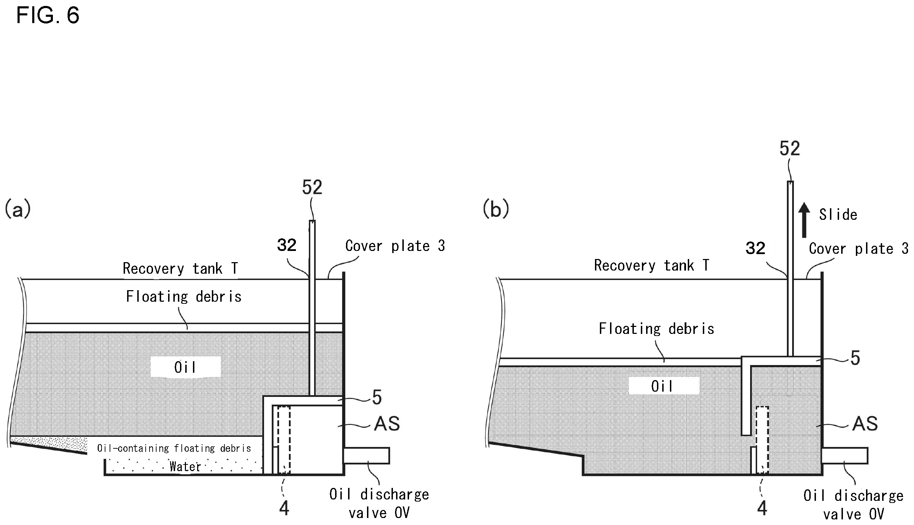

Next, the method of using the cover member 5 will be explained with reference to FIG. 6. First, during the inflow of the floating oil from the oil/water separation tank OS and during the heat by the tank heating section H of the recovery tank T, as shown in FIG. 6(a), the cover member 5 is slid down to its lowest position so that it covers the waste solid removal body 4 from outside. This prevents sludge from adhering to the waste solids removal body 4, effectively preventing contamination of the waste solids removal body 4. This can prevent the oil recovery from decreasing.

On the other hand, as shown in FIG. 6(b), during oil recovery from the oil discharge valve OV, the cover member 5 is slid upward using the slide bar 52 so that the oil and the waste solid removal body 4 come into contact (i.e., so that oil can enter the oil suction space AS). This allows the waste solid removal body 4 to come into contact with the oil stored in the recovery tank T, or enables oil to flow in from the top side of the suction space AS.

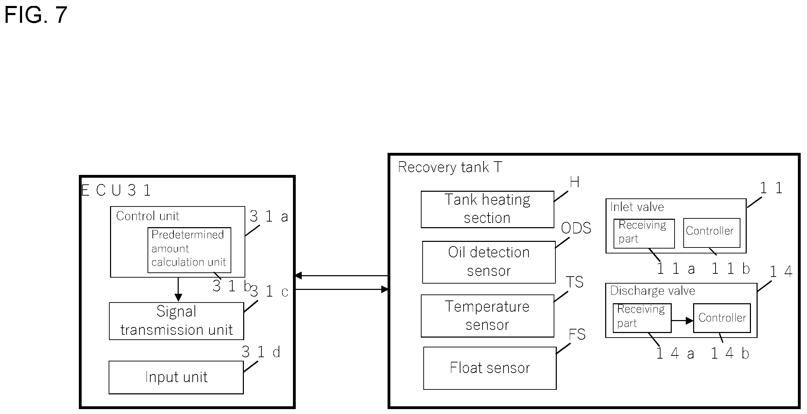

Next, referring to FIG. 7, the function of the ECU (Electronic Control Unit) 31, which is provided on the control panel equipped on the recovery tank T, will be explained. Note that the control panel is not an essential component in the recovery tank T of this Embodiment 1. Furthermore, the control panel may be integrally provided with the recovery tank T or may be separate from the recovery tank T.

The ECU 31 opens the inlet valve 11 to allow oil-containing wastewater from the oil/water separation tank OS to flow into the recovery tank T. It also controls the heating operation of the tank heating section H to start, when the inlet valve 11 closes. Furthermore, it controls the heating operation of the tank heating section H to stop, when the detected temperature from the temperature sensor TS reaches a predetermined temperature (65-70 degrees). This controls the tank heating section H to operate in an on/off cycle.

Subsequently, the ECU 31 controls the water discharge valve WV to open. This allows only water to be efficiently returned from the recovery tank T to the oil/water separation tank OS.

After this, if oil is detected by the oil detection sensor ODS installed at the bottom of the recovery tank T, the ECU 31 then controls to slide the cover member 5 upward manually/electrically. Subsequently, it opens the oil discharge valve OV. This allows only the oil to be efficiently transferred from the recovery tank T to the purification transfer device 12.

Specifically, as shown in FIG. 7, the ECU 31 comprises a control unit 31a, a predetermined amount calculation unit 31b, a signal transmission unit 31c, and an input unit 31d. The control unit 31a determines whether to receive an oil detection signal from the oil detection sensor OS to efficiently separate oil, sludge, and water from the floating oil filled in the recovery tank T by heating. Once an oil detection signal is received, it sends a start-up control signal to the tank heating portion H via the signal transmission unit 31c.

The predetermined amount calculation unit 31b performs calculation processing based on various parameter information (the capacity of the recovery tank T, the inflow amount from the inflow valve 11, the outflow amount from the discharge valve 14, the temperature of TS, and oil detection). The signal transmission unit 31c transmits an on/off control signal for the heating operation to the tank heating portion H. It also sends valve opening adjustment signals to the inlet valve 11 and the discharge valve 14. The input unit 31d provided on the control panel, such as an operation setter or remote control, enables input of various parameter information required for the predetermined amount calculation in the predetermined amount calculation unit 31b, as well as input setting of the predetermined amount.

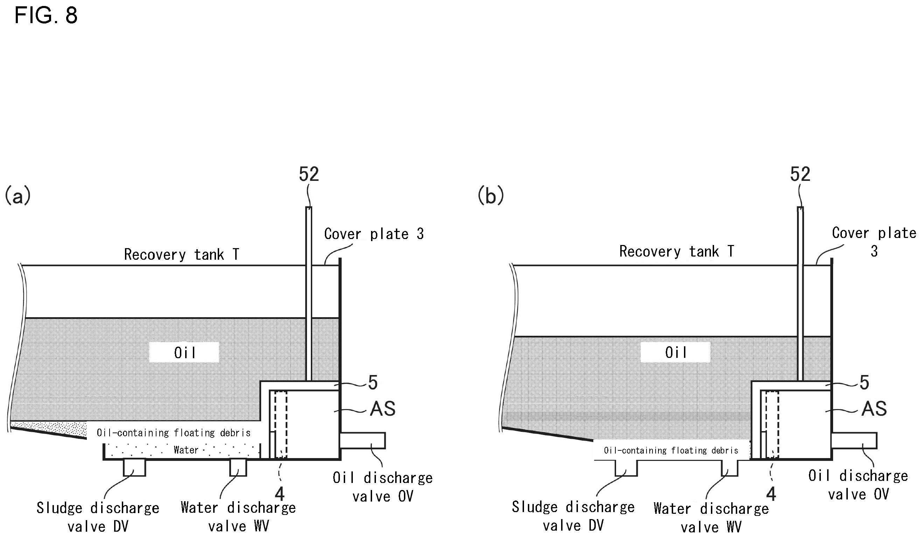

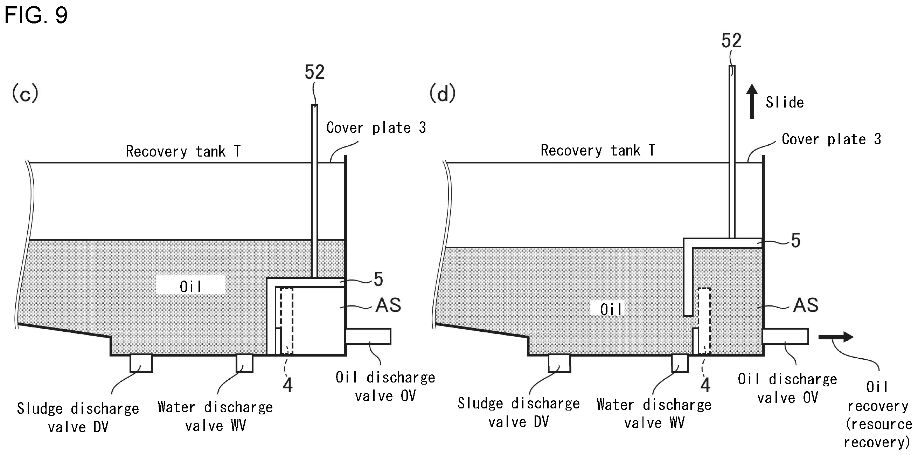

Next, the transition state of the stored portion within the recovery tank T according to this Embodiment 1 will be explained with reference to FIG. 8 and 9. First, floating oil is introduced from the oil/water separation tank OS into the recovery tank T. When the liquid level detected by the float sensor FS, etc., reaches a predetermined position, the inlet valve 11 is closed. Note that this flow path switching may also be performed manually. At this time, the cover member 5 is fixed at its lowest point.

Next, the tank heating section H is started to heat the inflow to approximately 70 degrees. Once it reaches approximately 70 degrees, separation occurs in order of increasing specific gravity. The inflowed floating oil separates into layers from the bottom: water, oil-containing floating sludge (so-called black oil), and oil, as shown in FIG. 8(a).

Then, when the temperature sensor TS provided on the tank body reaches, for example, 70 degrees and the heating of the wastewater is complete (i.e., the separation into layers is complete), the water discharge valve WV formed at the bottom of the recovery tank T is opened. According to this, the water at the bottom of the recovery tank T is then returned to the oil/water separation tank OS via the discharge valve 14. After completing the withdrawal of inflow water, as shown in FIG. 8(b), the recovery tank T now contains, from the bottom layer upward, sludge (oil-containing floating sludge) and oil components. This sludge portion can be manually recovered via the sludge discharge valve (manual valve) DV formed on the bottom side of the recovery tank T, as shown in FIG. 8(b).

Herein, the extracted oil-containing floating sludge is classified as industrial waste and can be stored in an industrial waste sludge tank and treated as industrial waste sludge. This sludge portion can be used, for example, for bio-gasification (methane power generation, clean hydrogen). The first step in recycling this unused sludge portion is expected to be bio-gasification (methane power generation, green hydrogen) in a biogas plant that performs methane fermentation.

Then, the discharge of this sludge layer causes the oil to fall and accumulate, but when the oil falls to the bottom of the recovery tank T, the recovery tank T becomes the state as shown in FIG. 9(c), and the oil is detected by the oil sensor OS. Then, the oil purification and transfer lamp start to light up, and the worker can close the sludge discharge valve (manual valve) DV. Alternatively, the automatically control may be implemented to close the sludge discharge valve (manual valve) DV.

Then, as shown in FIG. 9(c), when oil accumulates inside the recovery tank T, the operator releases the cover member 5. And then, due to the float plate 53, the top surface of the cover member 5 automatically floats up to the oil surface. Alternatively, the operator may slide the cover member 5 upward, for example, to a height of approximately 350 mm or more above the waste solids removal body 4, creating a gap between the top surface of the suction space AS and the bottom surface of the cover member 5. Subsequently, the oil discharge valve OV is opened, and the electric pump is turned on.

As a result, the oil in the recovery tank T is then automatically recovered, transitioning the interior of the recovery tank T to the state shown in FIG. 9(d). Herein, the recovered oil is purified into clean refined oil by removing fine debris using the purification transfer device 12 and is collected in the purified oil tank 13.

Furthermore, Conventionally, for example, as shown in Japan Patent No. 5452814, a purification transfer device, which is a separator for waste solids, waste oil contaminant, and wastewater layers, was used. By opening the lid of the tank and introducing this purification transfer device into inside of the tank, the waste solids, the waste oil contaminant, and the wastewater layers were selectively separated and removed. In the end, only the waste oil usable as an oil substitute fuel was then transferred to a separate transport or storage container. In contrast, the present invention can eliminate the need to repeatedly open the lid plate 3 of the recovery tank T to introduce such a purification transfer device that efficiently recovers only the oil layer within the recovery tank T. This improves operational efficiency and significantly reduces the frequency of lid openings, thereby minimizing odor problems.

Through these procedures, the oil, sludge, and water within the recovery tank T are separated, completing the recovery operation. After these procedures, when the oil/water separation tank OS installed within the same facility reaches full capacity, the process shown in FIG. 8(a) to (d) will repeat. That is, transferring the wastewater in the oil/water separation tank OS to the recovery tank T and then separating and collecting an oil and sludge are automatically repeated efficiently.

As mentioned above, this invention is an oil and sludge recovery tank T for recovering reusable oil and sludge from oil-containing wastewater, comprising: an oil discharge valve OV provided on the side surface of the bottom side of the oil and sludge recovery tank T; a waste solid removal body 4 that is erected from the bottom surface of the oil and sludge recovery tank T and has a U-shaped configuration when viewed from above, and comprises three rectangular prism-shaped waste solid removal plates 4a~4c erected from the bottom surface of the oil and sludge recovery tank T; and a suction space AS for suctioning oil stored within the oil and sludge recovery tank T via the oil discharge valve OV, wherein the suction space AS is enclosed by said side surface and the waste solid removal body 4, wherein the waste solid removal body 4 has an oil-selective function for selectively passing oil.

With this configuration, the recovery tank T of this embodiment can: (1) perform oil recovery (resource recovery) from wastewater grease with the cover plate 3 barely opened, minimizing odor spreading. Also, the recovery tank T can (2) allow both oil purification/transfer and sludge removal to be nearly automated, eliminate the need for manual labor each time, and enable complete resource recovery from waste oil just by introducing the recovery tank T on-site within the facility area.

In other words, the recovery tank T is installed on-site at energy-saving and space-saving locations such as food factories that discharge oily wastewater. And then, it can almost automatically extract, recover, and recycle oil and sludge components from the oil/water separation tank OS that pools the oily wastewater, while preventing odor from spreading. Furthermore, some food factories generate several tons of floating oil daily. Thereby, just installing an on-site recovery tank T like the one described in this invention within the factory premises enables the provision of an on-site resource recovery service.

Furthermore, sludge can be efficiently extracted and recovered via the sludge discharge valve (manual valve) DV installed on the recovery tank T. Additionally, inflow water inflowing the recovery tank T can be returned directly to the oil/water separation tank OS via the circulation pipe P2.

### (Embodiment 2)

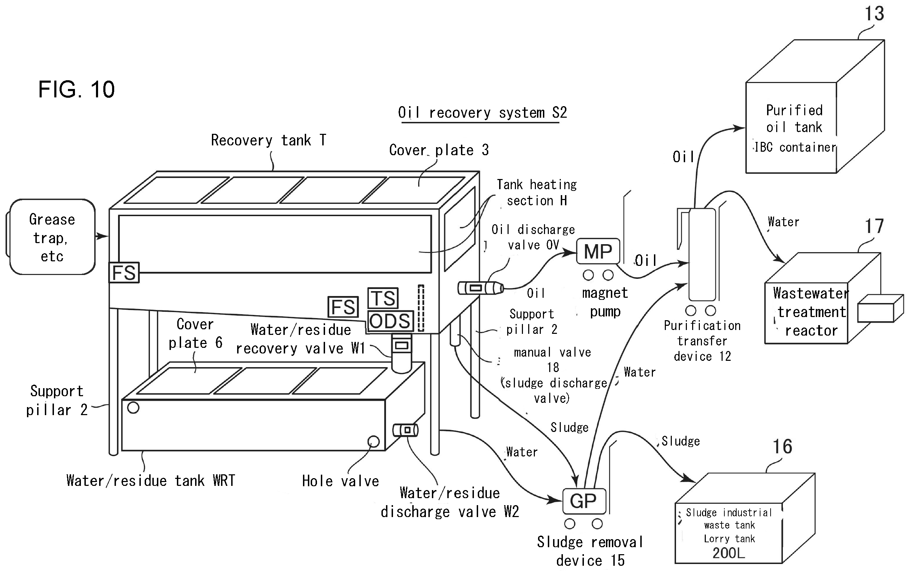

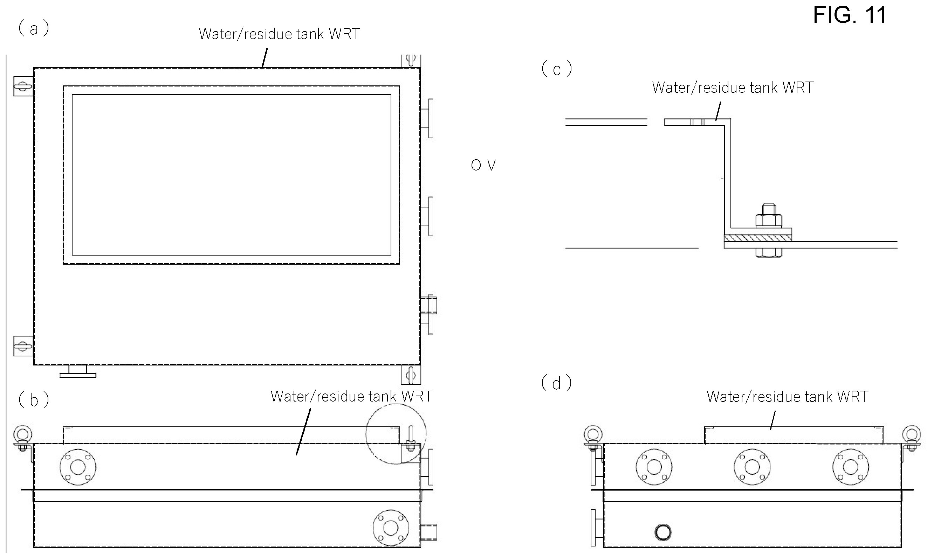

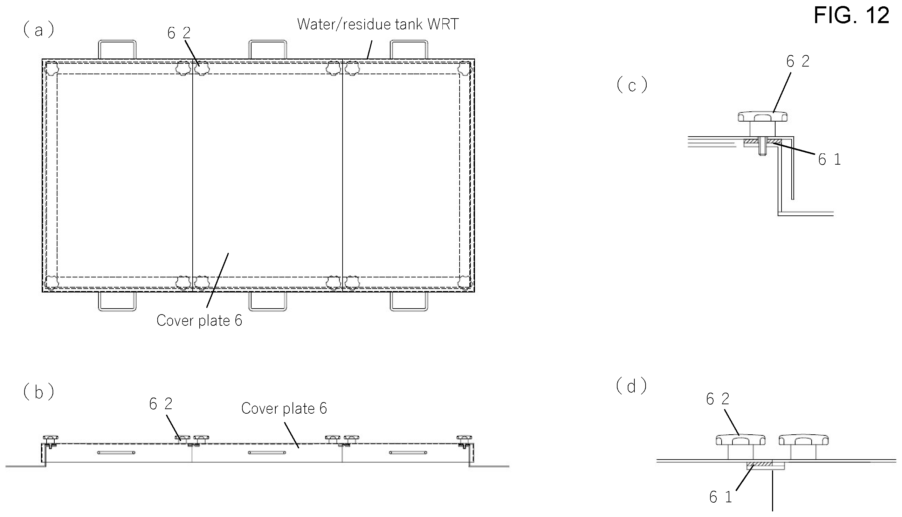

Next, the oil recovery system according to Embodiment 2 of the present invention will be described with reference to FIGS. 10 to 14. This oil recovery system S2 is used in commercial facilities, restaurants such as fast food chains, and fuel manufacturing plants that discharge wastewater containing solid matter such as oil, sediment, and suspended matter. The oil and sludge recovery tank T, according to this embodiment 2 also functions as a tank for temporarily storing floating grease and sludge pooled in conventional treatment devices (e.g., grease traps) installed at each business location.

Further, this oil recovery system S2 removes water and debris from the pooled wastewater and efficiently recovers oil, sludge, and other materials to enable energy reuse (resource recovery). This oil recovery system S2 can be installed on-site within facilities such as fuel manufacturing plants and commercial facilities (e.g., fast food chains). Furthermore, for example, a field agency (a specialized contractor certified by the applicant through provision of proprietary know-how, training, and guidance) may provide services to manage grease trap cleaning for restaurants and also manage this oil recovery system S2.

Next, the oil recovery system S2 according to this embodiment 2 will be described with reference to FIG. 10. In this oil recovery system S2, a water/residue tank WRT is installed in addition to the recovery tank T described in the above-mentioned embodiment 1. Note that while a float sensor is not essential for the recovery tank T in this embodiment 2, its other configurations are largely similar to those of the aforementioned embodiment 1, so detailed explanation except for the water/residue tank WRT is omitted.

This water/residue tank WRT is a tank for removing and storing the residue and water separated from the bottom when the recovery tank T is heated, via a water/residue recovery valve (e.g., 40A electric hole valve drain valve) WI installed at the bottom of the recovery tank T. The water/residue tank WRT has a rectangular prism shape, for example, with dimensions of approximately 1500 mm (width) × 570 to 650 mm (height) × 1100 mm (depth) (capacity of about 300 L). Note that the shape of the water/residue tank WRT is not limited to the shape shown in this figure; it may also be cylindrical or other shapes as long as it can perform the same function.

As shown in FIG, 12, the water/residue tank WRT is equipped with multiple detachable cover plates 6 on its top surface. These cover plates 6 are fixed to the top surface of the water/residue tank WRT using knob bolts 62 via gaskets 61. Additionally, a water/residue discharge valve W2, such as a 40A socket, is provided on the side.

Furthermore, since wastewater enters the recovery tank T of Embodiment 2 directly from sources such as grease traps, it is anticipated that floating debris may remain in the upper layer. In such cases, a relatively large-diameter floating debris recovery valve (manual valve) specifically provided on the side of the recovery tank T may be used. A suction pump can then be employed through this valve to efficiently remove the floating debris through the floating debris recovery valve. Alternatively, the floating debris may be collected manually by periodically opening the cover plate 6 of the recovery tank T.

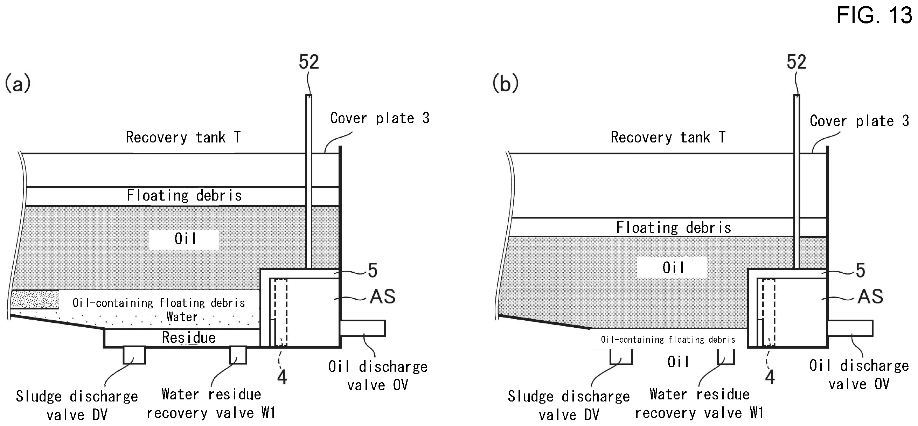

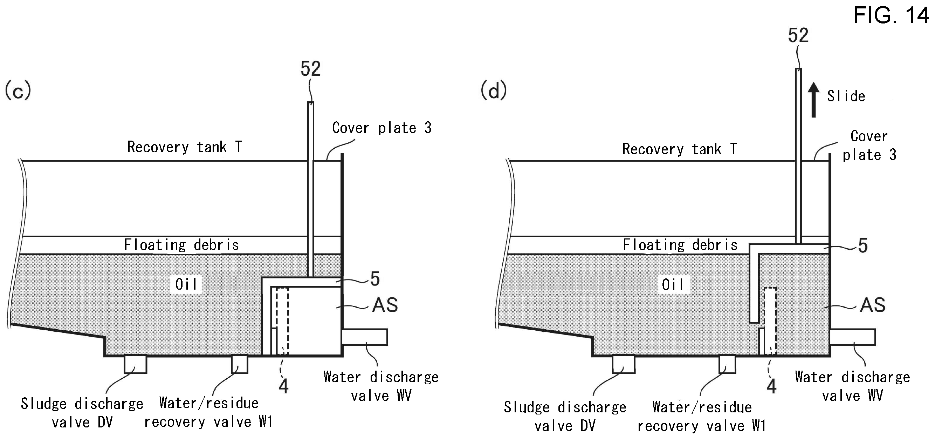

Next, the transition state of the stored portion within the recovery tank T according to this embodiment 2 will be explained with reference to FIGS. 13 and 14. First, wastewater from the grease trap, etc., is transferred into the recovery tank T. This transfer is conducted within the same facility and may be performed manually by an operator using dedicated tools or automatically via the inflow pipe by switching an electric pump.

Next, once the wastewater reaches a predetermined level inside the recovery tank T, the tank heating section H is activated to heat the inflow to approximately 70 degrees Celsius. Upon reaching approximately 70 degrees Celsius, the wastewater separates into layers from the bottom up: residue, water, oil-containing suspended sludge (so-called black oil), oil components, and floating debris, as shown in FIG. 13(a).

Once heating of the wastewater is complete (i.e., separation into layers is complete), the water/residue recovery valve W1 formed at the bottom of the recovery tank T is opened. Then, the residue and water located at the bottom of the recovery tank T are transferred to the water/residue tank WRT. After the residue and inflow water are removed from the recovery tank T, as shown in FIG. 13(b), sludge, oil, and floating debris are stored in the recovery tank T from the bottom layer upward.

The discharged residue and water are temporarily stored in water/residue tank WRT. The residue is discharged outside the water/residue tank WRT through a 40A HT hole valve formed in the side bottom of the water/residue tank WRT, recovered into a dedicated tank, and becomes suitable component for industrial waste disposal. Meanwhile, the water is drained into the wastewater treatment reactor 17, for example, using a purification transfer device 12, after impurities and debris are removed.

Next, if a sludge layer exists, the sludge may accumulate near the bottom of the recovery tank T, as shown in FIG. 13(b). This sludge can be manually recovered using a manual valve 18. Herein, the recovered sludge is then transferred via the sludge removal device 15 to a sludge industrial waste tank (e.g., a lorry tank 16 (W800mm×L630mm×H630mm, capacity 200L)), enabling its disposal as industrial waste.

As this sludge layer is discharged, the oil falls and accumulates. When the oil falls to the bottom of the recovery tank T, the tank reaches the state shown in FIG. 14(c), and the oil sensor OS detects the oil. This causes the oil purification/transfer lamp to illuminate, prompting the operator to release the lock of the cover member 5 using the slide bar 52. Then, the top surface of the cover fixture 5 automatically floats up to the oil surface due to the float plate 53. Subsequently, the oil discharge valve OV is opened, and the electric pump is turned on.

As a result, only the oil within the recovery tank T is collected, and the interior of the recovery tank T transitions to the state shown in FIG. 14(d). Herein, the recovery oil is purified into clean refined oil by removing excess debris using the purification transfer device 12 and is collected into the purified oil tank (IBC container) 13.

Herein, the floating debris accumulating in the state shown in FIG. 14(d) cannot enter the oil suction space AS due to the presence of the waste solid removal body 4 and the cover member 5. For example, if floating debris is mixed in, the cover member 5 can be moved up and down according to the liquid level detected by the float sensor FS, thereby appropriately preventing the floating debris from entering the suction space AS. This floating debris is removed periodically or when a predetermined amount is reached, for example, by extracting it through a dedicated outlet provided on the bottom side of the recovery tank T, or by an operator manually opening the cover member 3 of the recovery tank T and collecting it by hand.

Thus, in this Embodiment 2 as well, similar to the Embodiment 1 above, the need to open the cover plate 3 of the recovery tank T each time to insert the purification transfer device is eliminated. As a result, it is possible to improve work efficiency. Furthermore, since oil recovery (resource recovery) operations can be performed without opening the cover plate 3 of the recovery tank T or the cover plate 6 of the water/residue tank WRT, odor generation can be minimized.

Through these procedures, the water, sludge, and oil within the recovery tank T are separated, completing the series of recovery operations. After these procedures, when the capacity of the grease trap and so on becomes full, wastewater is transported to the recovery tank T, and the procedures repeat from the state shown in FIG. 13(a).

As described above, this Embodiment 2 also achieves the same effects as the Embodiment 1. (1) Since oil recovery (resource recovery) operations can be performed without opening the cover plate 3 of the recovery tank T or the cover plate 6 of the water/residue tank WRT, odor generation can be minimized. (2) It allows both oil purification/transfer and sludge removal to be nearly automated, eliminate the need for manual labor. (3) Since the recovery tank T comprises the water/residue tank WRT, even if residue flows into the recovery tank T, the water and residue can be easily transferred and managed in the water/residue tank WRT.

It is noted that the present invention is not limited to the above-described embodiments and modified examples, and various modifications are possible within the spirit and scope of the present invention. For example, to accelerate oil recovery speed, multiple oil-selective separation mechanisms S1 may be provided in the oil and sludge recovery tank T.

### Reference Signs List

S, S2: Oil recovery system
S1: Oil-selective separation mechanism
T: Oil and sludge recovery tank (recovery tank)
OV: oil discharge valve
OS: Oil-water separation tank
AS: Suction space
H: Tank heating section
WRV: Water/residue recovery tank
W1: Water/residue recovery valve
WV: Water discharge valve
DV: Sludge discharge valve
P1: Oil supply pipe
P2: Circulation pipe
3, 6: Cover Plate
4: Waste Solid Removal Body
4a-4c: Waste Solid Removal Plate
5: Cover member
11: Inlet Valve
14: Discharge Valve
32: Through-Hole
41: Thin Plate
42: perforated Hole
43: Glass Wool
51: Intrusion Prevention Wall
52: Slide Bar
53: Float Plate

## Claims

1. An oil and sludge recovery tank for recovering reusable oil and sludge from oil-containing wastewater, comprising:
an oil discharge valve provided on the side surface of the bottom side of the oil and sludge recovery tank;
a waste solid removal body erected from the bottom surface of the oil and sludge recovery tank; and
a suction space for suctioning oil stored within the oil and sludge recovery tank via the oil discharge valve, wherein the suction space is enclosed by said side surface and the waste solid removal body,
wherein the waste solid removal body has an oil-selective function for selectively passing oil.

2. The oil and sludge recovery tank according to claim 1,
wherein the waste solid removal body has a U-shaped configuration when viewed from above and comprises three rectangular prism-shaped waste solid removal plates erected from the bottom surface of the oil and sludge recovery tank.

3. The oil and sludge recovery tank according to claim 2,
wherein, as the oil-selective function, multiple perforated holes are formed on the surface of the waste solid removal body,
wherein glass wool is filled within the internal space of the waste solid removal body, and
wherein a thin plate serving as a water pressure prevention wall is arranged on the bottom side of the waste solid removal body.

4. The oil and sludge recovery tank according to claim 1 or 2, further comprising a cover member, which is operable to enclose the suction space and the waste solid removal body from the outside.

5. The oil and sludge recovery tank according to claim 4,
wherein the cover member has a shape with three sides and the top surface formed by plate-like intrusion prevention walls, while one side and the bottom surface are open, and
wherein a slide bar extending vertically is connected to the top surface of the cover member.

6. The oil and sludge recovery tank according to claim 5, further comprising:
a cover plate that is detachably provided to the oil and sludge recovery tank and maintains a sealed state with the oil and sludge recovery tank when the cover plate is in a closed state,
wherein the slide bar of the cover member can slide vertically by passing the slide bar through a through-hole formed in the cover plate.

7. The oil and sludge recovery tank according to claim 4,
wherein a float plate is integrally provided on the upper surface of the cover member.

8. The oil and sludge recovery tank according to claim 1,
wherein the oil and sludge recovery tank has a substantially rectangular prism shape,
wherein a water discharge valve for discharging water and a sludge discharge valve for removing sludge, are provided on the bottom surface of the oil and sludge recovery tank, and
wherein a tank heating section having a surface-shaped structure is provided on at least one of its side surfaces and bottom surface of the oil and sludge recovery tank.

9. An oil recovery system, comprising:
a circulation pipe, which returns from an inflow pipe, which sends the upper layer of the oil/water separation tank, back to the oil/water separation tank via the oil and sludge recovery tank described in claim 1,
wherein the oil recovery system performs oil and sludge recovery operation using said oil and sludge recovery tank from said oil/water separation tank.

10. An oil recovery system comprising the oil and sludge recovery tank described in claim 1,
wherein the oil and sludge recovery tank further comprises a water/residue recovery valve provided in the bottom surface of the oil and sludge recovery tank to recover separated residue and water from the bottom of the oil and sludge recovery tank,
wherein the oil recovery system comprises a water/residue tank that is connected to the water/residue recovery valve, and that stores water and residue recovered from the water/residue recovery valve.

11. The oil recovery system according to claim 10,
wherein the water/residue tank further comprises a cover plate that is detachably provided to the water/residue tank and maintains a sealed state with the water/residue tank when the cover plate is in a closed state.
